# EUROPEAN PATENT APPLICATION

(11) **EP 3 410 153 A1**
(43) Date of publication of application: **05.12.2018**
(21) Application number: 17382328.7
(22) Date of filing: 02.06.2017
(51) Int. Cl.: G01S 17/02, G01S 17/88, G01S 7/51, B64F 5/60, B64F 5/10

(54) **PORTABLE DEVICE AND METHOD FOR LOCATING COMPONENTS INSIDE A CLOSED ENVIRONMENT, PREFERABLY INSIDE AN AIRCRAFT**

(71) Applicant: Airbus Defence and Space, S.A., 28906 Getafe (Madrid) (ES)
(72) Inventor: GONZALEZ CUENCA, Javier, 28906 Getafe (Madrid) (ES); FERNANDEZ UREÑA, Luis, 28906 Getafe (Madrid) (ES)
(74) Representative: Herrero & Asociados, S.L.

(57) **Abstract**

The invention refers to a portable device and method for locating components inside a closed environment, preferably inside an aircraft, comprising a portable computer (3) having a screen (2), and a digital map of the aircraft (4', 4") and a components data base (5) stored in the computer, the data base comprising identifiers and aircraft location; LIDAR (6) and IMU sensors (7) respectively adapted to determine the real time position and orientation of the portable device (1) with respect to the aircraft; wherein the computer is adapted to receive a selected component identifier and an operating mode. On map mode, the selected component is displayed on the digital map. On navigation mode, both the portable device (user) and the selected component position are displayed on the digital map. The position of the portable device is updated to guide the user to the selected component.

## Description

### Object of the invention

The present invention refers to a portable device and a method for locating components inside a closed environment, preferably applicable for locating components inside an aircraft.

One object of the present invention is to provide a device and method adapted to both indicate the location of a specific component inside an aircraft or closed environments, and recognize and track the position of an operator, to guide him towards to a specific component inside the aircraft.

Another object of the invention is to provide a device and method capable of providing a precise and fast location of both the component and the user.

### Background of the invention

An aircraft is plenty of different components and some of them have to be located during manufacturing or maintenance tasks. For example, some commercial aircrafts may have more than 10,000 electric connectors.

During maintenance or manufacturing tasks, some components of the aircraft have to be checked, but the location of most of these components is unknown to the operator, so that, finding a particular component can provoke waste of time and useless work removing wrong panels, covers floors, etc.

Nowadays for locating and tracking a component outdoor is easily carried out using direct or indirect Geo Positioning System (GPS). However, this solution cannot be applied to indoors scenarios, like a hanger or a fuselage, and does not provide enough accuracy to find small components.

Other technologies capable of achieving indoor location, are based on beacons and sensors in the components to be tracked, but the necessary pre-installation in the aircraft discard this option.

It would therefore be desirable to provide technical means able to accurately localize a specific component, and to locate and track the position of a user at any moment inside an aircraft, or outside the aircraft if the aircraft is inside a hanger, without using GPS and avoiding any previous installation of beacons or sensors.

### Summary of the invention

The present invention overcomes the above mentioned drawbacks by providing a device and method for locating components inside a closed environment, such as an aircraft, which is simple, quick to use, autonomous (without need of any changes in the aircraft), and capable of accurately calculating the relative position between a user and a component of an aircraft.

One aspect of the present invention refers to a portable device for locating components inside a closed environment, preferably applicable for locating components inside an aircraft. The device comprises a portable computer and LIDAR (Laser Imaging Detection and Ranging) and IMU (Inertial Measurement Unit) sensors.

The portable computer has a screen, and a digital map of the aircraft and a component data base stored in the computer. The component data base comprises an identifier and an aircraft location. This way, every stored component has an associated location, which can be retrieved when accessed by the identifier.

The LIDAR and IMU sensors are coupled with the portable computer. The LIDAR sensor is adapted to determine the real time position of the portable device (user) with respect to the aircraft. The IMU sensor is adapted to determine the orientation of the portable device (user) with respect to the aircraft.

This way, the LIDAR sensor is capable to determine the user position (holding the portable device) and detect any movement of said user. Thus, the trajectory can be easily tracked and the user is able to see his location at each time.

The IMU sensor is sensitive to orientation, and helps to keep the LIDAR sensor (and thus the portable device) in a horizontal position, parallel to the ground, to thus provide correct positioning measures.

The portable computer is adapted to receive a selected component identifier and a user-selectable operating mode. The computer is adapted to operate on map mode and on navigation mode. When the computer is operating on map mode, said computer is further adapted to display on the screen the selected component on the digital map of the aircraft, from the aircraft location associated with the selected component identifier, and when the computer is operating on navigation mode, the computer is further adapted to display on the screen both the real time position of the portable device and the selected component on the digital map of the aircraft, from the location associated with the selected component identifier and the LIDAR and IMU sensors information.

This way, the portable device allows the user to choose between two modes of operation, map mode and navigation mode. On both modes, the computer receives the identifier of a component to be located (selected component).

On map mode, the device shows the location of the selected component on a digital map of the aircraft, after retrieving the aircraft location associated to the received identifier in the component data base. This mode easies the location of any component in an aircraft whose identifier-location had been stored in the computer database. It is a basic mode, usable when the user can identify the location in the aircraft easily, by just showing its location in the aircraft map.

On navigation mode, the device shows both the real time position of the portable device (user) and the selected component on a digital map of the aircraft. The LIDAR and IMU sensors determine the actual position of the portable device, and detect any movement. Thus, the trajectory followed by the user is easily tracked, and the user can see his location at each time.

The invention provides a cost-saving and simple solution that simplifies locating a component inside of an aircraft, avoiding the use of beacons or sensors. The device saves time in repairing and maintaining tasks, locating components quickly and precisely. In addition, the invention offers a portable device that works autonomously, without requiring any modification in the aircraft.

Another aspect of the invention refers to a method for locating components inside a closed environment, preferably applicable for locating components inside an aircraft. The method comprises the following steps:
- storing a digital map of the aircraft, and a components data base on a portable computer, the data base comprising an identifier and an aircraft location, and the portable computer having a screen,
- providing a portable device comprising the portable computer and LIDAR and IMU sensors coupled with the portable computer, and respectively adapted to determine the real time position and orientation of the portable device with respect to the aircraft,
- receiving a selected component identifier and a user-selectable operating mode comprising a map mode and a navigation mode,
   such that, when the map mode is selected, the method further comprises displaying on the screen the selected component on the digital map of the aircraft, from the aircraft location associated with the selected component identifier,
   and such that, when the navigation mode is selected, the method further comprises determining the real time position and orientation of the portable device with respect to the aircraft, and displaying on the screen both the real time position of the portable device and the selected component on the digital map of the aircraft, from the location associated with the selected component identifier and the LIDAR and IMU sensors information.

The method offers two operating modes by which a component can be quickly and precisely localized. In addition, the method contemplates a mode (navigation mode) able to recognize and track the user position, to guide him towards to the selected component within the aircraft.

### Brief description of the drawings

Preferred embodiments of the invention are henceforth described with reference to the accompanying drawings, wherein:
Figure 1 shows an implementation of a portable device for locating components inside a closed environment according to the invention.
Figure 2 shows an exploded view of the portable device depicted in Figure 1.
Figure 3 shows an operational flowchart followed by the computer or the method according to the invention.
Figure 4 shows an operating example followed by the computer or method according to the invention.

### Preferred embodiment of the invention

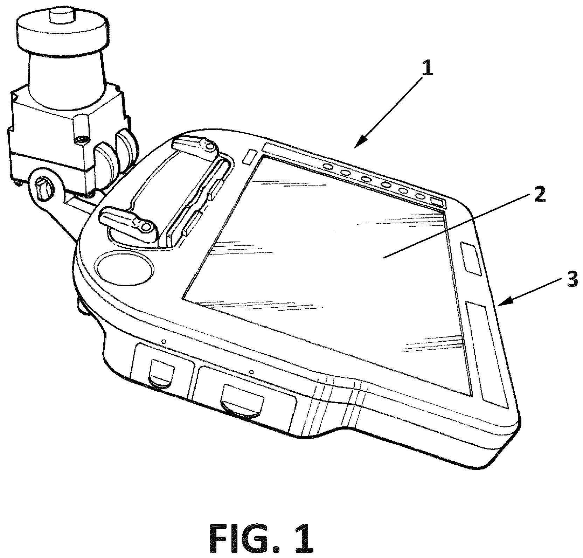

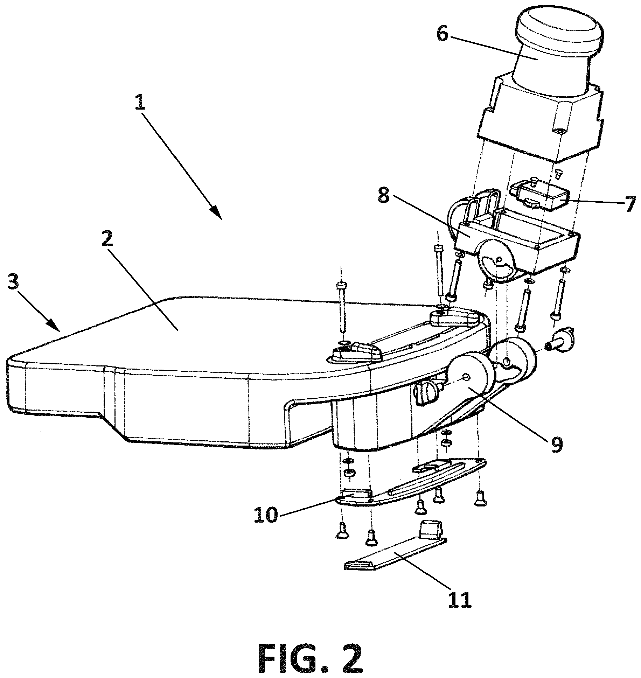

Figures 1 and 2 show the portable device (1) for locating components inside a closed environment, according to a preferred embodiment of the invention.

The portable device (1) comprises a portable computer (3), and LIDAR (Laser Imaging Detection and Ranging) (6) and IMU (Inertial Measurement Unit) sensors (7) coupled with said computer (3). The LIDAR sensor (6) is adapted to determine the real time position of the portable device (1) with respect to the aircraft. The IMU sensor (7) is adapted to determine the orientation of the portable device (1) with respect to the aircraft.

The computer (3) has a screen (2). A digital map of the aircraft (4', 4"), and a component data base (5) are stored in the computer (3). The data base (5) comprises an identifier, preferably a code or name type identifier, and an aircraft location, preferably in Cartesian coordinate format.

As shown in Figure 2, the device (1) may comprise a movable bracket (8) articulated in a fixed bracket (9) to provide support for the LIDAR and IMU sensors (6, 7), and facilitate its management, easing its movements. Further, the device (1) may comprise a bottom cover (10) and a maintenance cover (11) to provide access to the LIDAR and IMU sensors supports to replace batteries or any other maintenance or reparation task.

When an operator wants to know a component location, enters the component identifier and selects a mode of operation. The component has to be previously stored in the data base (5).

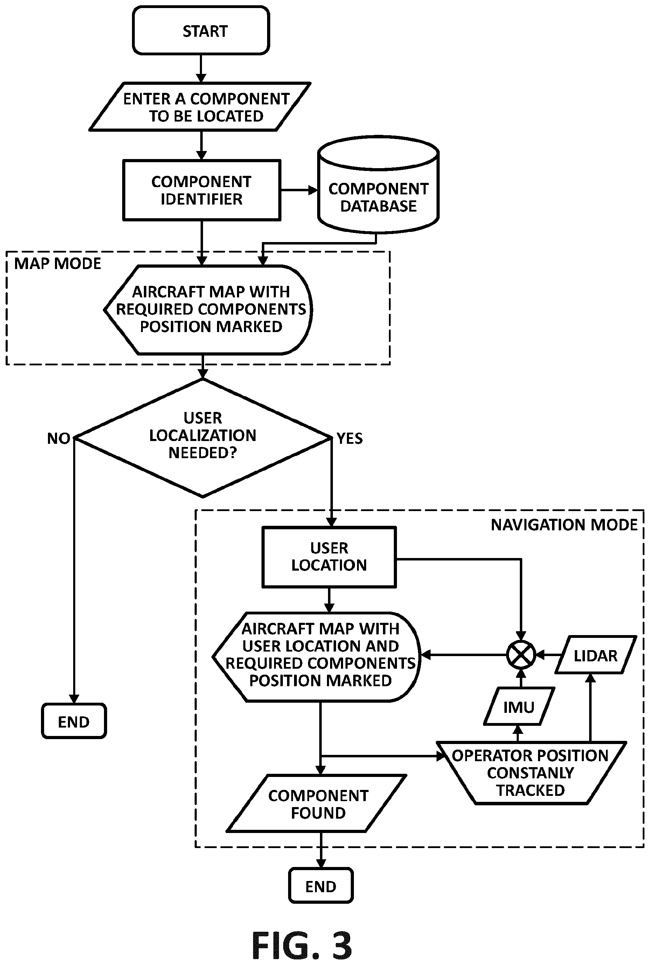

Figure 3 shows a general operational flowchart of the computer (3) of the portable device (1) and the method according to the invention.

As show, the computer (3) is adapted to start asking the user to enter a component to be located. Once a component identifier is received, the component database is consulted, and under a map operation mode, an aircraft map with the required component position marked is displayed on the screen (2) of the computer (3).

After that, the computer (3) is adapted to ask the user if localization is needed. If the user does not require localization, the computer (3) ends the location process or asks the user if a new component wants to be located. Where, if the user requires being located, the computer (3) enters on navigation mode.

On navigation mode, Lidar (6) and IMU (7) sensors are initialized to locate the user. Once the user is located, an aircraft map with both marked user and component position are displayed. While component is not found, user position is constantly tracked. The aircraft map is periodically updated crossing LIDAR and IMU sensors information with the user position. Once the component is found, the computer may end the location process or asks the user if a new component wants to be located.

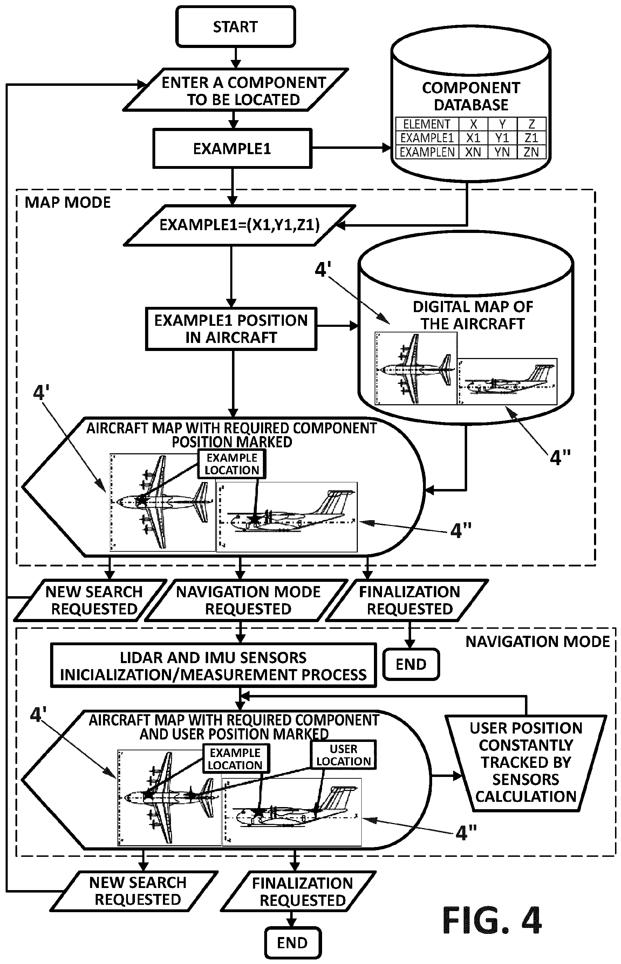

Figure 4 shows an example in which a user wants to locate component "EXAMPLE1".

As shown, on map mode, the EXAMPLE1 position is marked and showed in the aircraft map. Preferably, horizontal and vertical digital section maps of the aircraft (4', 4") are displayed.

Once the map mode is finished, the computer may request for completion, new search, or entering the navigation mode.

On navigation mode, Lidar (6) and IMU (7) sensors are initialized to locate the user, and horizontal and vertical digital section maps of the aircraft (4', 4") both marking user and component position are displayed. User position is constantly tracked, and horizontal and vertical digital section maps of the aircraft (4', 4") correspondingly updated.

## Claims

1. Portable device (1) for locating components inside a closed environment, preferably applicable for locating components inside an aircraft, comprising:
a portable computer (3) having a screen (2), and a digital map of the aircraft (4', 4") and a components data base (5) stored in the computer, the data base (5) comprising an identifier and an aircraft location,
a LIDAR (6) and IMU sensors (7) coupled with the portable computer (3) and respectively adapted to determine the real time position and orientation of the portable device (1) with respect to the aircraft,
wherein the portable computer (3) is adapted to receive a selected component identifier and a user-selectable operating mode, said modes comprising a map mode and a navigation mode,
wherein, when the computer (3) is operating on map mode, said computer (3) is further adapted to display on the screen (2) the selected component on the digital map of the aircraft (4), from the aircraft location associated with the selected component identifier,
and when the computer (3) is operating on navigation mode, the computer is further adapted to display on the screen (2) both the real time position of the portable device (1) and the selected component on the digital map of the aircraft (4', 4"), from the location associated with the selected component identifier and the LIDAR (6) and IMU (7) sensors information.

2. Portable device (), according to claim 1, wherein the portable computer (3) is adapted to display horizontal and vertical digital section maps of the aircraft (4', 4") with the position of the selected component marked on said section maps when the portable computer (3) is operating on map mode, and to further display the position of the portable computer (3) marked on said section maps (4', 4") when the portable computer (3) is operating on navigation mode.

3. Method for locating components inside a closed environment, preferably applicable for locating components inside an aircraft, comprising:
storing a digital map of the aircraft (4', 4"), and a components data base (5) on a portable computer (3), the data base (5) comprising an identifier and an aircraft location, and the portable computer (3) having a screen (2),
providing a portable device (1) comprising the portable computer (3) and LIDAR (6) and IMU sensors (7) coupled with the portable computer (3) and respectively adapted to determine the real time position and orientation of the portable device (1) with respect to the aircraft,
receiving a selected component identifier and a user-selectable operating mode comprising a map mode and a navigation mode,
such that when the map mode is selected, the method further comprises displaying on the screen (2) the selected component on the digital map of the aircraft (4', 4"), from the aircraft location associated with the selected component identifier, and
such that when the navigation mode is selected, the method further comprises determining the real time position and orientation of the portable device (1) with respect to the aircraft, and displaying on the screen (2) both the real time position of the portable device (1) and the selected component on the digital map of the aircraft (4', 4"), from the location associated with the selected component identifier and the LIDAR (6) and IMU (7) sensors information.

4. Method, according to claim 3, wherein displaying on the screen (2) the digital map of the aircraft (4', 4") comprises displaying horizontal and vertical digital section maps of the aircraft (4', 4") with the position of the selected component marked on said section maps when the portable computer (3) is operating on map mode, and further displaying the position of the portable computer (3) marked on said section maps (4', 4") when the portable computer (3) is operating on navigation mode.
